# EUROPÄISCHE PATENTSCHRIFT

(11) **EP 3 165 557 B1**
(45) Veröffentlichungstag und Bekanntmachung des Hinweises auf die Patenterteilung: **27.01.2021**
(21) Anmeldenummer: 16195788.1
(22) Anmeldetag: 26.10.2016
(51) Int. Cl.: C09D 175/04

(54) **VERFAHREN ZUM VERANKERN EINES BESCHICHTUNGSMITTELS AUF EINER POLYMEROBERFLÄCHE**
METHOD FOR ANCHORING A COATING TO A POLYMER SURFACE
PROCÉDÉ D'ANCRAGE D'UN REVÊTEMENT SUR UNE SURFACE POLYMÈRE

(30) Priorität: 03.11.2015 DE 102015221455
(43) Veröffentlichungstag der Anmeldung: 10.05.2017
(73) Patentinhaber: tesa SE, 22848 Norderstedt (DE)
(72) Erfinder: Bir, Gerhard, 22117 Hamburg (DE); Ibrahimi, Roya, 22525 Hamburg (DE); Junghans, Monika, 22457 Hamburg (DE); Neuhaus-Steinmetz, Hermann, 22926 Ahrensburg (DE)
(74) Vertreter: tesa SE

(56) Entgegenhaltungen:
- EP-A1- 1 627 898
- US-A1- 2015 159 053
- Sébastien Guimond ET AL: "Biaxially Oriented Polypropylene (BOPP) Surface Modification by Nitrogen Atmospheric Pressure Glow Discharge (APGD) and by Air Corona", Plasmas and Polymers, 1 March 2002 (2002-03-01), pages 71-88, XP055524604, New York DOI: 10.1023/A:1015274118642 Retrieved from the Internet: URL:https://link.springer.com/content/pdf/ 10.1023/A:1015274118642.pdf

## Beschreibung

Die Erfindung liegt auf dem Gebiet der Beschichtung von Polymeroberflächen. Insbesondere wird ein Verfahren zur verbesserten Verankerung von Beschichtungsmassen auf Basis wässriger Dispersionen auf Polymeroberflächen vorgeschlagen.

Die Beschichtung polymerer Trägermaterialien mit wässrigen Systemen wird beispielsweise im Rahmen der Herstellung beschriftbarer Trägermaterialien, zum Beispiel transparenter Filme, wie sie in Klebebändern eingesetzt werden können, praktiziert. Grundsätzlich sind die bekannten Methoden zur Erzeugung beschriftbarer Trägermaterialien sowohl auf lösungsmittel- als auch auf wasserbasierte Systeme ausgerichtet. Häufig wird dabei ein Polyurethansystem als Bindemittel eingesetzt.

Beschriftbare haftklebrige Produkte auf Basis wässriger Dispersionen sind beispielsweise aus WO 2011/124476 A1 bekannt. Die darin beschriebene beschriftbare Trägerrückseite wird durch aufeinanderfolgendes Aufbringen einer ersten Zusammensetzung, die beispielsweise ein Polyurethan, Stärke und Silicagelpartikel umfasst, sowie einer zweiten, trennwirksamen Zusammensetzung, die beispielsweise ein Organopolysiloxan/Polyharnstoff/Polyurethan-Blockcopolymer umfasst, auf eine Seite eines Trägermaterials erzeugt. Beide Zusammensetzungen werden bevorzugt aus wässriger Dispersion aufgetragen. Die Trägerfolie, beispielsweise eine Coronavorbehandelte BOPP-Folie, kann dabei einer Vorbehandlung mit einem Primer unterzogen werden.

In der Praxis hat sich gezeigt, dass häufig das Aufbringen eines Primers auf das zu beschichtende Polymermaterial erforderlich ist, um eine ausreichende Verankerung der Beschichtungsmassen auf dem Trägermaterial zu erreichen. Eine Alternative oder ergänzende Maßnahme zur Primer-Vorbehandlung besteht in einer Corona-Behandlung der zu beschichtenden Polymeroberfläche. So beschreibt US 6,017,577 eine Vorbehandlung von Substraten, die mit einem lösemittelbasierten Polyurethan-Harnstoff-Hydrogel beschichtet werden sollen, mit Gasplasmen.

Die Applikation eines Primers bringt einen aufwändigen Arbeitsschritt in den Herstellungsprozess ein. Generell sind daher Verfahren zum Beschichten von Polymeroberflächen von Interesse, die sich in möglichst wenigen Schritten durchführen lassen. Aufgabe der vorliegenden Erfindung ist es, ein Verfahren zum Beschichten einer Polymeroberfläche mit einem Isocyanat-vernetzbaren Beschichtungsmittel zur Verfügung zu stellen, das effizient, d.h. in möglichst wenigen Schritten durchgeführt werden kann, gleichwohl aber eine belastbare Verankerung der Beschichtungsmasse auf dem Polymersubstrat ermöglicht.

Der Lösung der Aufgabe liegt der Grundgedanke der Erfindung zugrunde, die zu beschichtende Polymeroberfläche in einer Stickstoffatmosphäre zu coronieren und die Beschichtung aus einer wässrigen Dispersion von Isocyanat-reaktiven Präpolymeren und Di- und/oder Polyisocyanaten zu generieren.

Ein erster allgemeiner Gegenstand der Erfindung ist daher ein Verfahren zum Beschichten einer Polymeroberfläche mit einem Isocyanat-vernetzbaren Beschichtungsmittel, das
- die Corona-Behandlung der zu beschichtenden Polymeroberfläche in einer Stickstoffatmosphäre;
- das Auftragen einer wässrigen Dispersion, enthaltend mindestens ein Präpolymer mit mindestens zwei Isocyanat-reaktiven funktionellen Gruppen, wobei die Gesamtheit der in der wässrigen Dispersion enthaltenen Präpolymere mit mindestens zwei Isocyanat-reaktiven funktionellen Gruppen den größten Gewichtsanteil an den dispergierten Substanzen hat, und mindestens ein Di- oder Polyisocyanat, und Stärke auf diese zu beschichtende Polymeroberfläche; und
- das Trocknen des so erzeugten Schichtverbundes umfasst.

Mit einem derartigen Verfahren lässt sich eine Verankerung erzielen, die einer mit bekannten Primern erreichbaren Verankerung mindestens gleichwertig ist. Es kann somit auf die Vorbehandlung der Polymeroberfläche mit einem Primer verzichtet werden.

Das zu beschichtende Polymer kann als Polymerfolie, Polymerschaum oder in anderer Form vorliegen. Bevorzugt gehört die zu beschichtende Polymeroberfläche zu einem Polyolefin. Beispielsweise kann es sich bei dem zu beschichtenden Material um eine Polyolefinfolie auf Basis von Polyethylen (PE), zweifach verstrecktem Polypropylen (BOPP), einfach verstrecktem Polypropylen (MOPP) oder eines Ethylen-Propylen-Dien-Mischpolymerisates (EPDM) handeln, wobei Polyolefinfolien auf Basis von BOPP besonders bevorzugt sind. Insbesondere gehört daher die zu beschichtende Polymeroberfläche zu einem Polypropylen, besonders bevorzugt zu einem zweifach verstreckten Polypropylen.

Unter einer "wässrigen Dispersion" wird ein mindestens zweiphasiges System verstanden, das eine kontinuierliche und mindestens eine fein verteilte (dispergierte) Phase aufweist, wobei die kontinuierliche Phase Wasser ist.

Unter einem Präpolymer wird eine oligomere oder polymere Verbindung verstanden, die als Vor- oder Zwischenprodukt zur Synthese eines Polymers eingesetzt wird. Vorliegend enthält das Präpolymer Isocyanat-reaktive funktionelle Gruppen, kann also durch Reaktion dieser Gruppen mit Di- oder Polyisocyanaten unter Anstieg der Molmasse in das Zielpolymer überführt werden. Das Präpolymer ist bevorzugt ausgewählt aus Polyethern, Poly(meth)acrylaten und Polyurethan-Präpolymeren. Erfindungsgemäß enthalten diese Polymere mindestens zwei Isocyanat-reaktive Gruppen, beispielsweise Hydroxygruppen (-OH).

Besonders bevorzugt ist das Präpolymer ein Polyurethan-Präpolymer. Unter einem Polyurethan-Präpolymer wird eine oligomere oder polymere Verbindung verstanden, in der konstituierende Einheiten durch Urethan-Bindungen (-NH-CO-O-) verknüpft sind. Erfindungsgemäß enthält das Polyurethan-Präpolymer mindestens zwei Isocyanat-reaktive funktionelle Gruppen, insbesondere Hydroxy-Gruppen und/oder Aminofunktionen mit mindestens einem reaktiven Wasserstoff-Atom.

Die Gesamtheit der Präpolymere mit mindestens zwei Isocyanat-reaktiven funktionellen Gruppen hat erfindungsgemäß den größten Gewichtsanteil an den dispergierten Substanzen, d.h. an den die dispergierte Phase bildenden Substanzen. Der Anteil der Präpolymere mit mindestens zwei Isocyanat-reaktiven funktionellen Gruppen an den dispergierten Substanzen beträgt bevorzugt mindestens 50 Gew.-%, stärker bevorzugt 50 bis 90 Gew.-%, insbesondere 55 bis 80 Gew.-%, beispielsweise 60 bis 75 Gew.-%. Die nach dem Trocknen auf der Polymeroberfläche vorliegende Beschichtungsmasse weist bevorzugt einen Gehalt an Isocyanat-vernetztem Polymer von 50 bis 90 Gew.-%, stärker bevorzugt von 60 bis 85 Gew.-%, insbesondere von 63 bis 78 Gew.-% auf.

Die wässrige Dispersion enthält darüber hinaus Stärke. Der Gewichtsanteil der Stärke an den dispergierten Substanzen beträgt vorzugsweise 5 bis 30 Gew.-%, stärker bevorzugt 10 bis 20 Gew.-%.

Ebenfalls bevorzugt enthält die wässrige Dispersion Kieselsäure. Der Gewichtsanteil der Kieselsäure an den dispergierten Substanzen beträgt vorzugsweise 1 bis 20 Gew.-%, stärker bevorzugt 5 bis 15 Gew.-%.

Der gemeinsame Anteil von Stärke und Kieselsäure an den dispergierten Substanzen beträgt bevorzugt 10 bis 40 Gew.-%.

Der Anteil der Gesamtheit an dispergierten Substanzen an der wässrigen Dispersion, dementsprechend der Gesamtfeststoffanteil der wässrigen Dispersion, beträgt bevorzugt 10 bis 40 Gew.-%, stärker bevorzugt 15 bis 35 Gew.-%, insbesondere 20 bis 30 Gew.-%. Als Corona-Behandlung wird eine durch hohe Wechselspannung zwischen zwei Elektroden erzeugte Oberflächenbehandlung auf Basis elektrischer Entladungen bezeichnet. Insbesondere wird meist unter dem Begriff "Corona" eine "dielektrische Barrierenentladung" (engl. dielectric barrier discharge, DBD) verstanden. Dabei besteht mindestens eine der Elektroden aus einem Dielektrikum, also einem Isolator, oder ist mit einem solchen beschichtet oder überzogen.

Die Corona-Behandlung ist als Methode zur Oberflächenvorbehandlung im Prinzip bekannter Stand der Technik (siehe dazu auch Wagner et al., Vacuum, 71 (2003), 417-436) und wird vielfach industriell eingesetzt. Ohne weitere Qualifizierung ist als Prozessgas Umgebungsluft anzunehmen, was im Rahmen dieser Erfindung aber nicht der Fall ist. Erfindungsgemäß ist es vorgesehen, Stickstoff als Prozessgas einzusetzen.

Das zu behandelnde Polymersubstrat wird bevorzugt im Entladungsraum zwischen einer Elektrode und einer Gegenelektrode platziert oder hindurchgeführt. Dies ist als direkte physikalische Behandlung definiert. Bahnförmige Substrate werden dabei typischerweise zwischen einer Elektrode und einer geerdeten Walze durchgeführt.

Bevorzugt wird das Substrat durch eine geeignet hohe Bahnspannung auf die als Walze ausgeführte Gegenelektrode gepresst, um Lufteinschlüsse zu verhindern. Der Behandlungsabstand beträgt typischerweise ca. 1 bis 2 mm.

Alternativ können Plasmadüsen mit Stickstoff eingesetzt werden, welche die gesamte Breite der Bahn abdecken. Bevorzugt werden zwei oder drei solcher Düsen bzw. quer zur Bahn angeordnete Reihen von Düsen über die Länge der Bahn eingesetzt.

Obwohl im weiteren Sinne eine Corona-Behandlung in Luft eine Technik ist, in der Plasma eine Rolle spielt, wird unter einer Plasmabehandlung bei Atmosphärendruck üblicherweise eine engere Definition verstanden. Wenn eine Corona-Behandlung statt in Luft in einer anderen Gasmischung, zum Beispiel auf Stickstoffbasis, stattfindet, wird zwar teilweise schon von Plasma gesprochen. Eine Plasmabehandlung bei Atmosphärendruck im engeren Sinn ist jedoch eine homogene und entladungsfreie Behandlung. Beispielsweise kann durch Einsatz von Edelgasen, teils mit Beimischungen, ein solch homogenes Plasma erzeugt werden. Dabei findet die Behandlung in einem flächigen homogen mit Plasma gefüllten Reaktionsraum statt.

Hinsichtlich der erfindungsgemäßen Atmosphäre aus Stickstoff ist es vorteilhaft, wenn sich keine oder zumindest nur sehr geringe Anteile an Restsauerstoff in dieser Atmosphäre befinden. Bevorzugt sind Sauerstoffanteile von maximal 1000 ppm, stärker bevorzugt von maximal 100 ppm, insbesondere von maximal 10 ppm.

Die Behandlungsintensität einer Coronabehandlung wird als "Dosis" in [W*min/m²] angegeben, mit der Dosis D=P/b*v, mit P=elektrischer Leistung [W], b=Elektrodenbreite [m], und v=Bahngeschwindigkeit [m/min].

Die erfindungsgemäße Corona-Behandlung der zu beschichtenden Polymeroberfläche erfolgt bevorzugt bei einer Dosis von 1 bis 150 W*min/m², besonders bevorzugt bei einer Dosis von 10 bis 130 W*min/m², insbesondere bei einer Dosis von 35 bis 100 W*min/m², beispielsweise bei einer Dosis von 50 bis 90 W*min/m².

Das Trocknen des aus dem Verfahren erhaltenen Schichtverbundes erfolgt bevorzugt im Ofen bei 90 bis 130 °C, stärker bevorzugt bei 100 bis 120 °C, insbesondere bei 105 bis 115 °C.

Ein weiterer Gegenstand der Erfindung ist ein Schichtverbund, der nach dem erfindungsgemäßen Verfahren herstellbar ist. Ein erfindungsgemäßer Schichtverbund zeichnet sich durch eine besonders gute Verankerung zwischen den beiden Schichten aus.

Ein weiterer Gegenstand der Erfindung ist die Verwendung eines erfindungsgemäßen Schichtverbundes zur Herstellung eines Klebebandes. Die durch das erfindungsgemäße Verfahren bewirkte hervorragende Verankerung zwischen polymerem Trägermaterial und dessen Rückseitenbeschichtung trägt zu einem stabilen Schichtverbund innerhalb des Klebebandes bei, was wiederum vorteilhafte Auswirkungen auf die Handhabbarkeit des Klebebandes als Ganzes hat. Beispielsweise bleibt der Schichtverbund auch bei möglicherweise höheren Abrollkräften erhalten, wie sie bei schnellerem, kräftigem Abziehen des Klebebandes von der Rolle auftreten können.

Ein weiterer Gegenstand der Erfindung ist ein Verfahren zur Herstellung eines Klebebandes, das das bis hierhin dargelegte, erfindungsgemäße Verfahren zum Beschichten einer Polymeroberfläche umfasst und weiter dadurch gekennzeichnet ist, dass
- die zu beschichtende Polymeroberfläche zu einem flächigen Trägermaterial gehört;
- die der zu beschichtenden Polymeroberfläche gegenüberliegende Oberfläche dieses flächigen Trägermaterials mit einer Haftklebemasse beschichtet wird; und
- die verbleibende Oberfläche des Beschichtungsmittels mit einem Trennmaterial beschichtet wird.

Unter einer Haftklebemasse wird im Rahmen dieser Schrift wie im allgemeinen Sprachgebrauch eine Masse verstanden, die - insbesondere bei Raumtemperatur - dauerhaft klebrig sowie klebfähig ist. Diese Masse kann sowohl eine äußere, anfassbare Schicht eines Klebebandes bilden als auch dessen mittlere Schicht, wobei sie in letzterem Fall nur an den Außenkanten sichtbar und spürbar ist. Charakteristisch für eine solche Schicht ist, dass sie durch Druck auf ein Substrat aufgebracht werden kann und dort haften bleibt, wobei der aufzuwendende Druck und die Einwirkdauer dieses Drucks im Allgemeinen nicht näher definiert werden. In manchen Fällen, abhängig von der genauen Art des Haftklebstoffs, der Temperatur und der Luftfeuchtigkeit sowie des Substrats reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffschichten oder haftklebrige Schichten haben besondere, charakteristische viskoelastische Eigenschaften, die zu der dauerhaften Klebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der zu betrachtenden Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes und der daraus hergestellten Schicht. Beide Größen sind abhängig von der Deformationsfrequenz und der Temperatur.

Die Größen können mit Hilfe eines Rheometers ermittelt werden. Das zu untersuchende schichtförmige Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) * cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) * sin(δ) (τ = Schubspannung, γ = Deformation, δ = Phasenwinkel = Phasenverschiebung zwischen Schubspannungs- und Deformationsvektor).

Eine Masse und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von 10° bis 10¹ rad/sec, G' zumindest zum Teil im Bereich von 10³ bis 10⁷ Pa liegt und wenn G" ebenfalls zumindest zum Teil in diesem Bereich liegt. Stoffe dieser Art werden mitunter auch als viskoelastische Stoffe und die daraus hergestellten Schichten als viskoelastische Schichten bezeichnet. Die Begriffe haftklebrig und viskoelastisch werden in dieser Schrift als synonyme Begriffe betrachtet. Mit einer Haftklebemasse ist demzufolge in dieser Schrift eine viskoelastische Masse innerhalb der genannten Grenzen für G' und G" gemeint.

Die der zu beschichtenden Polymeroberfläche gegenüberliegende Oberfläche des flächigen Trägermaterials, welche im Rahmen des erfindungsgemäßen Verfahrens mit einer Haftklebemasse beschichtet wird, kann vor ihrer Beschichtung mit der Haftklebemasse ebenfalls einer Corona-Behandlung unterzogen werden. Bevorzugt wird auch diese Oberfläche des flächigen Trägermaterials in einer Stickstoff-Atmosphäre Corona-behandelt.

Als Haftklebemasse können grundsätzlich alle dem Fachmann bekannten und für den vorgesehenen Verwendungszweck geeigneten Haftklebemassen eingesetzt werden. Bevorzugt ist die Haftklebemasse eine Polyacrylat-basierende Haftklebemasse.

Das Trennmaterial, mit dem die verbleibende, also nicht mit dem flächigen Trägermaterial in Kontakt befindliche Seite des Beschichtungsmittels beschichtet wird, unterliegt ebenfalls keinen grundsätzlichen Einschränkungen. Bevorzugt ist dieses Trennmaterial eine SilikonZusammensetzung.

Ein weiterer Gegenstand der Erfindung ist ein Klebeband, das nach dem erfindungsgemäßen Verfahren zur Herstellung eines Klebebandes herstellbar ist.

## Patentansprüche

1. Verfahren zum Beschichten einer Polymeroberfläche mit einem Isocyanat-vernetzbaren Beschichtungsmittel, umfassend
- die Corona-Behandlung der zu beschichtenden Polymeroberfläche in einer Stickstoffatmosphäre;
- das Auftragen einer wässrigen Dispersion, enthaltend
mindestens ein Präpolymer mit mindestens zwei Isocyanat-reaktiven funktionellen Gruppen, wobei die Gesamtheit der in der wässrigen Dispersion enthaltenen Präpolymere mit mindestens zwei Isocyanat-reaktiven funktionellen Gruppen den größten Gewichtsanteil an den dispergierten Substanzen hat;
mindestens ein Di- oder Polyisocyanat; und
Stärke
auf diese zu beschichtende Polymeroberfläche; und
- das Trocknen des so erzeugten Schichtverbundes.

2. Verfahren gemäß Anspruch 1, **dadurch gekennzeichnet, dass** der Gewichtsanteil der Gesamtheit der in der wässrigen Dispersion enthaltenen Präpolymere mit mindestens zwei Isocyanat-reaktiven funktionellen Gruppen an den dispergierten Substanzen mindestens 50 % beträgt.

3. Verfahren gemäß mindestens einem der vorstehenden Ansprüche, **dadurch gekennzeichnet, dass** das Präpolymer mit mindestens zwei Isocyanat-reaktiven Gruppen ausgewählt aus Polyethern, Poly(meth)acrylaten und Polyurethan-Präpolymeren ist.

4. Verfahren gemäß mindestens einem der vorstehenden Ansprüche, **dadurch gekennzeichnet, dass** das Präpolymer mit mindestens zwei Isocyanat-reaktiven Gruppen ein Polyurethan-Präpolymer ist.

5. Verfahren gemäß mindestens einem der vorstehenden Ansprüche, **dadurch gekennzeichnet, dass** die wässrige Dispersion Kieselsäure enthält.

6. Verfahren gemäß mindestens einem der vorstehenden Ansprüche, **dadurch gekennzeichnet, dass** die wässrige Dispersion Stärke und Kieselsäure enthält und der gemeinsame Anteil von Stärke und Kieselsäure an den dispergierten Substanzen 10 bis 40 Gew.-% beträgt.

7. Verfahren gemäß mindestens einem der vorstehenden Ansprüche, **dadurch gekennzeichnet, dass** die zu beschichtende Polymeroberfläche zu einem Polyolefin gehört.

8. Verfahren gemäß mindestens einem der vorstehenden Ansprüche, **dadurch gekennzeichnet, dass** die zu beschichtende Polymeroberfläche zu einem Polypropylen gehört.

9. Verfahren gemäß mindestens einem der vorstehenden Ansprüche, **dadurch gekennzeichnet, dass**
- die zu beschichtende Polymeroberfläche zu einem flächigen Trägermaterial gehört;
- die der zu beschichtenden Polymeroberfläche gegenüberliegende Oberfläche dieses flächigen Trägermaterials mit einer Haftklebemasse beschichtet wird; und
- die verbleibende Oberfläche des Beschichtungsmittels mit einem Trennmaterial beschichtet wird.

10. Schichtverbund, herstellbar nach einem Verfahren gemäß mindestens einem der vorstehenden Ansprüche.

11. Klebeband, herstellbar nach einem Verfahren gemäß Anspruch 9.

12. Verwendung eines Schichtverbunds gemäß Anspruch 10 zur Herstellung eines Klebebandes.

## Claims

1. Method for coating a polymer surface with an isocyanate-crosslinkable coating composition, comprising
- in a nitrogen atmosphere, corona-treating the polymer surface to be coated;
- applying an aqueous dispersion, comprising at least one prepolymer having at least two isocyanate-reactive functional groups, where the entirety of the prepolymers present in the aqueous dispersion and having at least two isocyanate-reactive functional groups has the greatest weight proportion among the dispersed substances;
at least one di- or polyisocyanate; and
starch
to this polymer surface to be coated; and
- drying the layer composite thus produced.

2. Method according to Claim 1, **characterized in that** the weight proportion of the entirety of the prepolymers present in the aqueous dispersion and having at least two isocyanate-reactive functional groups among the dispersed substances is at least 50%.

3. Method according to at least one of the preceding claims, **characterized in that** the prepolymer having at least two isocyanate-reactive groups is selected from polyethers, poly(meth)acrylates and polyurethane prepolymers.

4. Method according to at least one of the preceding claims, **characterized in that** the prepolymer having at least two isocyanate-reactive groups is a polyurethane prepolymer.

5. Method according to at least one of the preceding claims, **characterized in that** the aqueous dispersion comprises silica.

6. Method according to at least one of the preceding claims, **characterized in that** the aqueous dispersion comprises starch and silica and the joint proportion of starch and silica among the dispersed substances is 10 to 40 wt%.

7. Method according to at least one of the preceding claims, **characterized in that** the polymer surface to be coated belongs to a polyolefin.

8. Method according to at least one of the preceding claims, **characterized in that** the polymer surface to be coated belongs to a polypropylene.

9. Method according to at least one of the preceding claims, **characterized in that**
- the polymer surface to be coated belongs to a sheetlike carrier material;
- the surface of this sheetlike carrier material that is opposite to the polymer surface to be coated is coated with a pressure-sensitive adhesive; and
- the remaining surface of the coating composition is coated with a release material.

10. Layer composite producible by a method according to at least one of the preceding claims.

11. Adhesive tape producible by a method according to Claim 9.

12. Use of a layer composite according to Claim 10 for producing an adhesive tape.

## Revendications

1. Procédé pour le revêtement d'une surface de polymère par un agent de revêtement réticulable avec un isocyanate, comprenant
- le traitement au Corona de la surface de polymère devant être revêtue dans une atmosphère d'azote ;
- le dépôt d'une dispersion aqueuse, contenant au moins un prépolymère comportant au moins deux groupes fonctionnels réactifs envers un isocyanate, la totalité des prépolymères contenus dans la dispersion aqueuse comportant au moins deux groupes fonctionnels réactifs envers un isocyanate possédant la plus grosse proportion en poids par rapport aux substances dispersées ;
au moins un diisocyanate ou polyisocyanate ; et
un amidon
sur cette surface de polymère devant être revêtue ; et
- le séchage du composite stratifié ainsi produit.

2. Procédé selon la revendication 1, **caractérisé en ce que** la proportion en poids de la totalité des prépolymères contenus dans la dispersion aqueuse comportant au moins deux groupes fonctionnels réactifs envers un isocyanate par rapport aux substances dispersées est d'au moins 50 %.

3. Procédé selon au moins l'une des revendications précédentes, **caractérisé en ce que** le prépolymère comportant au moins deux groupes réactifs envers un isocyanate est choisi parmi des polyéthers, des poly(méth)acrylates et des prépolymères de polyuréthane.

4. Procédé selon au moins l'une des revendications précédentes, **caractérisé en ce que** le prépolymère comportant au moins deux groupes réactifs envers un isocyanate est un prépolymère de polyuréthane.

5. Procédé selon au moins l'une des revendications précédentes, **caractérisé en ce que** la dispersion aqueuse contient une silice.

6. Procédé selon au moins l'une des revendications précédentes, **caractérisé en ce que** la dispersion aqueuse contient un amidon et une silice et la proportion cumulée d'amidon et de silice par rapport aux substances dispersées est de 10 à 40 % en poids.

7. Procédé selon au moins l'une des revendications précédentes, **caractérisé en ce que** la surface de polymère devant être revêtue appartient à une polyoléfine.

8. Procédé selon au moins l'une des revendications précédentes, **caractérisé en ce que** la surface de polymère devant être revêtue appartient à un polypropylène.

9. Procédé selon au moins l'une des revendications précédentes, **caractérisé en ce que**
- la surface de polymère devant être revêtue appartient à un matériau de support plat ;
- la surface opposée à la surface de polymère devant être revêtue de ce matériau de support plat est revêtue avec une masse autoadhésive ; et
- la surface restante de l'agent de revêtement est revêtue avec un matériau de séparation.

10. Composite stratifié pouvant être préparé par un procédé selon au moins l'une des revendications précédentes.

11. Ruban adhésif pouvant être préparé par un procédé selon la revendication 9.

12. Utilisation d'un composite stratifié selon la revendication 10 pour la préparation d'un ruban adhésif.
